Europäisches Patentamt

European Patent Office

Office européen des brevets

(11) Veröffentlichungsnummer: **0 067 960**
A1

## (12) EUROPÄISCHE PATENTANMELDUNG

(21) Anmeldenummer: 82104231.4

(22) Anmeldetag: 14.05.82

(51) Int. Cl.³: **A 01 K 9/00**

(30) Priorität: 24.06.81 DE 3124669

(43) Veröffentlichungstag der Anmeldung:
29.12.82 Patentblatt 82/52

(84) Benannte Vertragsstaaten:
AT BE CH DE FR GB IT LI NL SE

(71) Anmelder: Förster, Martin, Dipl.-Ing.
Gerwigstrasse 27
D-7707 Engen(DE)

(72) Erfinder: Förster, Martin, Dipl.-Ing.
Gerwigstrasse 27
D-7707 Engen(DE)

(74) Vertreter: Engelhardt, Guido, Dipl.-Ing.
Ehlersstrasse 17 Postfach 1350
D-7990 Friedrichshafen(DE)

(54) Tränkeautomat.

(57) Einem Tränkeautomaten (1) zur Aufbereitung von Futtermittel, indem ein mit Wasser zu vermischendes Medium (I) aus einem Pulverbehälter (3) dosiert in einen Mischbehälter (2) eingeführt wird, ist eine Vorrichtung (21) zur gesteuerten Zugabe eines weiteren Mediums (II) in den Mischbehälter (2) zugeordnet. Diese Vorrichtung (21) besteht aus einem mittels einer Zuführungsleitung (24) mit dem Tränkeautomaten (1) verbundenen Mischer (22) und einer in die Zuführungsleitung (24) eingesetzten Dosierpumpe (23), die mittels eines durch das zu fütternde Tier (Sensor 9) oder den Tränkeautomaten (11) beeinflußbaren Programmschaltwerkes (4) steuerbar ist.

Auf diese Weise ist es möglich, in das aufbereitete Futtermittel Medikamente oder andere Zusatzstoffe kontrolliert einzubringen, und zwar in einer einstellbaren Menge und unabhängig von dem in dem Pulverbehälter (3) gelagerten Medium (I). Es müssen somit nicht alle Tiere mit Zusatzstoffen angereichertes Futtermittel aufnehmen, sondern es können mittels einer Identifizierungseinrichtung leicht kranke Tiere ausgewählt und individuell behandelt werden. Des weiteren kann ein Medikament auch in kleinen Mengen, unmittelbar nach dessen Verordnung aufbereitet werden, der Zeitaufwand zur Mischung eines Medizinalfutters entfällt.

FIG. 1

EP 0 067 960 A1

Martin Förster
77o7 Engen

Tränkeautomat

Die Erfindung bezieht sich auf einen Tränkeautomaten zur
Aufbereitung von Futtermittel, der aus einem Mischbehälter
und einem Pulverbehälter besteht, aus dem das mit Wasser
zu vermischende Medium dosiert in den Mischbehälter einführbar ist.

Derartige Tränkeautomaten, die seit einiger Zeit zur Aufbereitung warmer trinkfertiger Milch in der Tierfütterung
eingesetzt werden, haben sich in der Praxis bewährt. Die
oftmals erforderliche Zugabe von Medikamenten oder anderen
Zusatzstoffen in das Futtermittel ist hierbei jedoch mit
erheblichen Schwierigkeiten verbunden, da diese in das in
dem Pulverbehälter eingelagerte Milchpulver einzumischen
sind. Eine einigermaßen gleichmäßige Verteilung des zugegebenen Stoffes kann aber nur von dem Lieferanten vorgenommen werden, da dies nur mittels aufwendiger Geräte zu
bewerkstelligen ist und diese am Einsatzort des Tränkeautomaten nicht zur Verfügung stehen. Die Anlieferung eines
dringend benötigten Medizinalfutters verzögert sich dadurch
mitunter nach dessen Verschreibung um mehrere Tage, so daß
die Behandlung kranker Tiere infrage gestellt ist, oder auf

./.

diese Weise nicht vorgenommen werden kann. Des weiteren ist von Nachteil, daß alle Tiere, die von dem Tränkeautomat versorgt werden, das jeweils aufbereitete und mit Zusatzstoffen angereicherte Futter abnehmen müssen, so daß dadurch die Betriebskosten erhöht werden. Außerdem ist die Lagerhaltung des angereicherten Milchpulvers, da Medikamente leicht verderben, mit Schwierigkeiten verbunden.

Es ist demnach Aufgabe der Erfindung, den Tränkeautomat der eingangs genannten Gattung in der Weise zu verbessern, daß jeweils gezielt in dessen Mischbehälter ein weiteres Medium, und zwar in einer einstellbaren Menge und unabhängig von dem in dem Pulverbehälter gelagerten Medium, zugegeben werden kann, so daß auch nur bestimmte Tiere mit einem Medikament zu versorgen sind. Ferner sollen zeitaufwendige Zubereitungen entfallen, vielmehr soll das weitere Medium, z. B. ein Medikament, unmittelbar nach dessen Verschreibung und Beschaffung in den Tränkeautomaten in der vorgegebenen auch veränderbaren Konzentration eingebracht werden können. Auch soll der Tränkeautomat über einen langen Zeitraum betriebsbereit sein, ohne daß dieser überwcht werden muß.

Gemäß der Erfindung wird dies dadurch erreicht, daß dem Tränkeautomat eine Vorrichtung zur gesteuerten Zugabe eines weiteren Mediums, insbesondere zur Zugabe von in Wasser gelösten Medikamenten, in den Mischbehälter zugeordnet ist.

Die dem Tränkeautomat zugeordnete Vorrichtung zur gesteuerten Zugabe des weiteren Mediums ist zweckmäßigerweise aus einem mit diesem mittels einer Zuführungsleitung verbundenen Mischer und einer in dieser eingesetzten Dosierpumpe zu bilden, die mittels eines durch das zu fütternde Tier oder den Tränkeautomat beeinflußbaren Programmschaltwerkes steuerbar ist.

./.

Angebracht ist es hierbei, den Mischer mit zwei jeweils
auf ein unterschiedliches Flüssigkeitsniveau ansprechbare
Steuerelemente, wie Druckschalter, Elektroden oder dgl.
zu versehen, mittels denen über Steuerleitungen die Dosierpumpe sowie eine dem Mischer zugeordnete Dosiereinrichtung
zur Zuführung des in diesem aufzubereitenden Mediums beeinflußbar sind, wobei, um die Konzentration verändern zu
können, eines oder beide Steuerelemente höhenverstellbar
angeordnet sein sollten.

Die Dosiereinrichtung kann aus einem oder mehreren nacheinander zuschaltbaren, in dem Mischer eingesetzten und
über dessen oberem Flüssigkeitsniveau angeordneten Vorratsbehältnissen gebildet werden, die an die Wasserzuführungsleitung des Mischers angeschlossen und zur Ausbringung des in diesem eingelagerten Mediums von dem gesteuert zuführbaren Wasser durchspülbar sind.

Der dem Mischer zugeordnete Vorratsbehälter kann in
einfacher Ausgestaltung aus einem winkelig oder U-förmig
ausgebildeten Mischrohr und einem auf dieses aufgesetzten
Trichter oder Aufsatzbehältnis bestehen, in den ein an die
Wasserzuführungsleitung angeschlossener Verteil- oder
Sprühkopf für das in den Vorratsbehälter einzubringende
Wasser eingesetzt ist.

Zur Einbringung des in dem Vorratsbehälter gelagerten
Mediums in den Mischer ist es angebracht, die Wasserzuführungsleitung mit einem Absperrventil auszustatten, das
mittels der diesem zugeordneten Steuerelemente in Abhängigkeit von dem Flüssigkeitsniveau steuerbar ist.

Nach einer andersartigen Ausgestaltung kann die Dosiereinrichtung auch aus einem über dem Mischer angeordneten
Zellenrad, einem durch Schieber gesteuert absperrbarem Zuführungsschacht, einem Becherrad oder dgl. sowie einem
zugeordneten Vorratsbehältnis gebildet werden.

Die dem Tränkeautomat zugeordnete Vorrichtung zur gesteuerten Zugabe des weiteren Mediums kann nach einer
andersartigen Ausgestaltung auch aus einem Vorratsbehältnis und einer dieses mit dem Tränkeautomat verbindenden
Zugabeinrichtung in Form einer gesteuert einschaltbaren
Förderschnecke, eines Förderbandes oder dgl. gebildet werden.

Wird einem Tränkeautomaten gemäß der Erfindung eine Vorrichtung zur gesteuerten Zugabe eines weiteren Mediums in
dessen Mischbehälter zugeordnet, ist es auf sehr einfache
Weise möglich, in das aufbereitete Futtermittel Medikamente
oder andere Zusatzstoffe einzubringen, ohne daß dazu gesonderte teuere und zeitaufwendig herzustellende Medizinalfutter benötigt werden. Das dem Futtermittel zuzugebende
Medikament ist nämlich lediglich in der gesonderten Mischvorrichtung aufzubereiten und kann von dieser in dosierten
Mengen abgerufen werden, so daß die Zugabe den Tieren
kontrolliert verabreicht werden kann. Es müssen somit nicht
alle Tiere zwangsläufig mit Zusatzstoffen angereichertes
Futtermittel aufnehmen, sondern es können, beispielsweise
mit Hilfe einer Identifizierungseinrichtung, ohne Schwierigkeiten kranke Tiere ausgewählt werden, deren Futtermittel
mit einer größeren oder kleineren Menge des jeweiligen
Medikamentes versetzt wird. Eine individuelle Behandlung
ist somit ohne Schwierigkeiten möglich.

Auch kann das jeweilige Medikament unmittelbar nach dessen
Verordnung und Beschaffung verabreicht werden, der Zeitaufwand zur Mischung eines Medizinalfutters entfällt demnach
gänzlich. Und da der Mischer mit einer Dosiereinrichtung
ausgestattet werden kann, ist es ferner möglich, in diesem
auch nur kleine Mengen des zweiten Mediums, die in kurzer Zeit, ohne daß ein Medikament u. U. abgebaut wird oder verdirbt, aufzubrauchen sind, aufzubereiten, dennoch ist die Betriebsbereitschaft über einen langen Zeitraum gewährleistet.

In der Zeichnung ist ein Ausführungsbeispiel eines Tränkeautomaten, der gemäß der Erfindung mit einer Vorrichtung zur gesteuerten Zugabe eines zweiten Mediums ausgestattet ist, dargestellt und nachfolgend im einzelnen erläutert. Hierbei zeigen, jeweils in schematischer Darstellung:

Fig. 1 den aus Misch- und Pulverbehälter bestehenden Tränkeautomaten sowie die diesem zugeordnete Vorrichtung zur Zugabe des zweiten Mediums,

Fig. 2 eine andersartige Ausgestaltung der bei der Vorrichtung nach Fig. 1 vorgesehenen Dosiereinrichtung und

Fig. 3 eine andersartige Ausgestaltung der dem Tränkeautomat zugeordneten Vorrichtung.

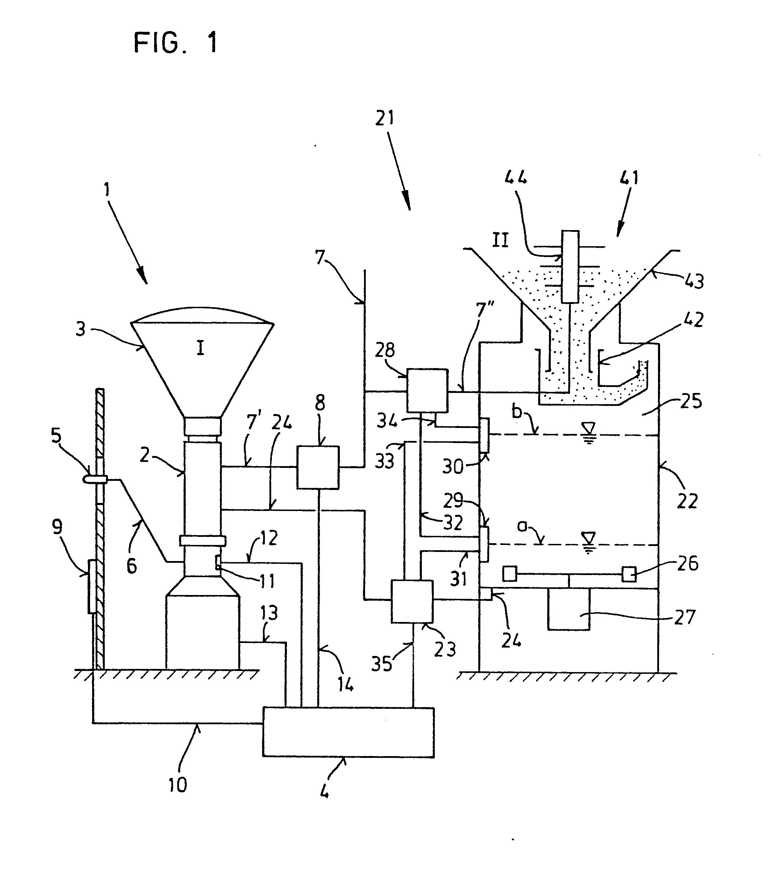

Der in Fig. 1 mit 1 bezeichnete Tränkeautomat zur Aufbereitung warmer trinkfertiger Milch besteht im wesentlichen aus einem Mischbehälter 2 sowie einem über diesem angeordneten Pulverbehälter 3, in dem das Milchpulver bevorratet und dem nach Bedarf jeweils eine bestimmte Menge an Milchpulver mittels einer nicht gezeigten Dosierzunge entnommen wird. Durch Zugabe von warmem Wasser, das über eine Leitung 7 bzw. 7' dem Mischbehälter 2 zuströmt, wird in diesem Milch angerührt, die von den Tieren an einer Saugstelle 5, die über eine Leitung 6 an den Mischbehälter 2 angeschlossen ist, aufgenommen werden kann. Der Mischbehälter 2 ist mit einem Druckschalter 11 ausgestattet, der über eine Leitung 12 mit einem Programmschaltwerk 4 in Verbindung steht, mittels dem, sobald das aufbereitete Futtermittel verbraucht ist, über eine weitere Leitung 13 der Mischbehälter 2 erneut einschaltbar ist. Außerdem wird ein in die Wasserzuführungsleitung 7, 7' eingesetztes Absperrventil 8, das über eine Leitung 14 einen Steuerimpuls erhält, geöffnet, so daß eine einstellbare Wassermenge in den Mischbehälter 2 eingebracht wird.

.</.

Um dem aus dem Medium I zubereiteten Futtermittel ein
weiteres Medium, z. B. ein Medikament, zugeben zu können,
ist dem Tränkeautomaten 1 eine Vorrichtung 21 zugeordnet,
die mit dessen Mischbehälter 2 in Verbindung steht und
in der das Medium II aufbereitet wird. Die Vorrichtung 21
besteht aus einem mit einer unterschiedlich auszubildenden
Dosiereinrichtung 41 bzw. 51 versehenen Mischer 22 und
einer Dosierpumpe 23, die in die Verbindungsleitung 24
eingesetzt und über eine Steuerleitung 35 an das Programmschaltwerk 4 angeschlossen ist.

In den Behälter 25 des Mischers 22 ist hierbei ein durch
einen Motor 27 antreibbarer Mixer 26 eingesetzt. Außerdem
weist der Mischer 22 zwei Steuerelemente in Form von Druckschalters 29 und 3o auf, die dem unteren Flüssigkeitsniveau
a sowie dem oberen Flüssigkeitsniveau b zugeordnet sind und
über Steuerleitungen 31 bzw. 33 mit der Dosierpunpe 4 sowie
über weitere Steuerleitungen 32 bzw. 34 mit einem Absperrventil 28 in Verbindung stehen, das in die Wasserzuführungsleitung 7, 7'' der Vorrichtung 21 eingesetzt ist.

Außerdem ist die Vorrichtung 21 mit einer Dosiereinrichtung
41 ausgestattet, die aus einem winkelförmigen Mischrohr 42
sowie einem auf dieses aufgesetzten Trichter 43 gebildet
ist. In dem Trichter 43 ist hierbei ein Verteil- oder Sprühkopf 44 angeordnet, an dem die Wasserzuführungsleitung 7''
angeschlossen ist. Sobald das Ventil 28 geöffnet wird, kann
somit das in dem Trichter 43 sowie dem Mischrohr 42 eingelagerte Medium II durch Ausspülen in den Behälter 25 befördert werden.

./.

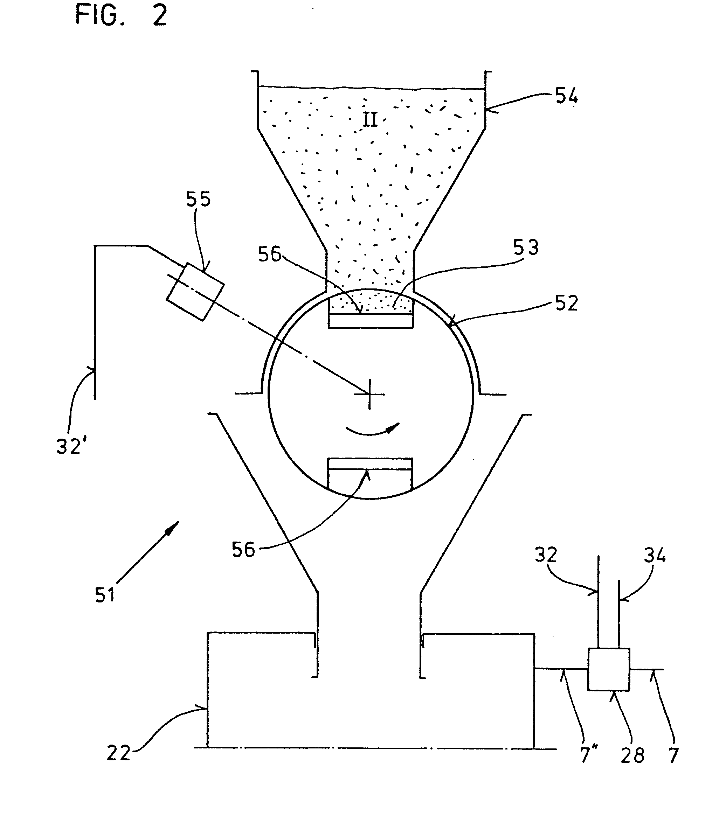

Gemäß Fig. 2 besteht die Dosiereinrichtung 51 aus einem
Zellenrad 52 und einem über diesem angeordneten Vorratsbehältnis 54. Das mit zwei Kammern 53, die zur Veränderung
der dem Mischer 22 jeweils zuführbaren Menge des Mediums
II mit einer verstellbaren Einlage 56 ausgestattet sind,
versehene Zellenrad 52 ist durch einen Motor 55 schrittweise antreibbar. Diesem werden die Steuerimpulse über
eine Leitung 32', die von der an den Druckschalter 29 angeschlossenen Leitung 32 abgezweigt oder unmittelbar an
diesen angeschlossen ist, zugeleitet.

Soll dem in dem Mischbehälter 2 des Tränkeautomaten 1 aus
dem Medium I aufbereiteten Futtermittel ein Medikament,
das aus dem Medium II in dem Vorratsbehälter 42, 43 der
Vorrichtung 21 gelagert ist, zugegeben werden, so ist die
Dosierpumpe 23 in Gang zu setzen. Einen entsprechenden
Steuerimpuls erhält diese von dem Programmschaltwerk 4
über die Steuerleitung 35. Damit feststellbar ist, welches
Tier sich jeweils an der Saugstelle 5 befindet, ist diese
mit einer als Sensor 9 ausgebildeten Identifizierungseinrichtung ausgestattet, die über eine Leitung 1o an das
Programmschaltwerk 4 angeschlossen ist. Nach Erkennung des
Tieres wird für dieses nicht nur in dem Tränkeautomat 1
die jeweilige Futtermittelmenge aufbereitet, sondern in den
Mischbehälter 2 wird auch mittels der Dosierpumpe 23 eine
bestimmte Menge des in der Vorrichtung 21 aufbereiteten
Mediums II eingebracht, so daß das Tier gezielt mit dem
Medium II versorgt werden kann.

Sinkt die in dem Behälter 25 des Mischers 22 aufbereitete
Menge auf das untere Flüssigkeitsniveau a ab, wird mittels
des Steuerelementes 29 über die Steuerleitung 31 die
Dosierpumpe 23 stillgesetzt. Gleichzeitig wird über die weitere an dem Druckschalter 29 angeschlossene Steuerleitung 32 das Ventil 28 geöffnet, so daß über die Leitung
7'' und den Sprühkopf 44 Wasser in den Trichter 43 und
das Mischrohr 42 einströmt und das dort gelagerte Medium II
ausgespült wird.

Die Wasserzufuhr über die Leitung 7'' und den Sprühkopf
44 wird erst abgestellt, wenn durch den Druckschalter 3o
über die Leitung 34 dem Ventil 28 ein entsprechender Steuerimpuls zugeleitet wird. Gleichzeitig wird über die Steuerleitung 33 die Sperre der Dosierpumpe 23 aufgehoben, so daß,
da deren jeweiliger Betriebszustand über die Leitung 35 dem
Programmschaltwerk 4 signalisiert wird, bei Erreichen des
oberen Flüssigkeitsniveau b auch der Tränkeautomat 1
wiederum betriebsbereit ist.

Der in dem Behälter 22 angeordnete Mischer 26 wird üblicherweise zu Beginn eines Füllvorganges eingeschaltet und danach, d. h. bei Beendigung des Mischvorganges außer Betrieb
gesetzt. Selbstverständlich ist es aber auch möglich, den
Mischer 26 intervallweise zu betätigen, um gegebenenfalls
Ablagerungen zu verhindern.

Die in dem Mischrohr 42 und dem Trichter 43 bevorratete
bzw. bei dem Ausführungsbeispiel nach Fig. 2 in einer Kammer
53 des Zellenrades 52 zugeführte Menge an Medium II sowie
das Volumen zwischen den beiden Flüssigkeitsniveaus a und b
sind aufeinander abgestimmt, so daß eine entsprechende
Konzentration aufbereitet wird. Und wird einer der Druckschalter 29 oder 3o in der Höhe verstellt angeordnet, kann
auf einfache Weise bei gleicher Menge - selbstverständlich
läßt sich auch die jeweils zugeführte Menge verändern -
die Konzentration den jeweiligen Erfordernissen angepaßt
werden.

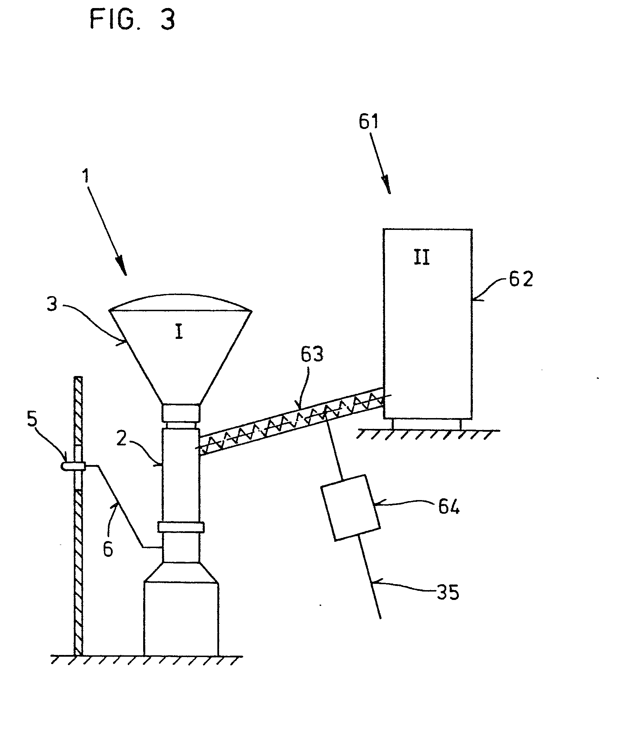

Gemäß Fig. 3 ist dem Tränkeautomat 1 eine Vorrichtung 61 zur Zuführung des Mediums II zugeordnet, die aus einem Vorratsbehälter 62 und einer durch einen Motor 64 antreibbaren Fördereinrichtung in Form einer Förderschnecke 63 gebildet ist. Der Antriebsmotor 64 der Fördereinrichtung wird hierbei mittels des Programmschaltwerkes 4 über die Steuerleitung 35 ähnlich wie die Dosierpumpe bei dem Ausführungsbeispiel nach Fig. 2 zeitweise eingeschaltet, um unmittelbar in den Mischbehälter 2 eine bestimmte Menge des Mediums II, das somit pulverförmig sein kann, einzubringen.

22. Juni 1981   e-1
A 2635

Martin Förster

7o7 Engen

P a t e n t a n s p r ü c h e :

1. Tränkeautomat zur Aufbereitung von Futtermittel, bestehend aus einem Mischbehälter und einem Pulverbehälter, aus dem das mit Wasser zu vermischende Medium
   dosiert in den Mischbehälter einführbar ist,

   d a d u r c h   g e k e n n z e i c h n e t ,

   daß dem Tränkeautomat (1) eine Vorrichtung (21; 61) zur
   gesteuerten Zugabe eines weiteren Mediums (II), insbesondere zur Zugabe von in Wasser gelösten Medikamenten
   oder anderen Zusatzstoffen, in den Mischbehälter (2)
   zugeordnet ist.

2. Tränkeautomat nach Anspruch 1,

   d a d u r c h   g e k e n n z e i c h n e t ,

   daß die dem Tränkeautomat (1) zugeordnete Vorrichtung (21)
   zur gesteuerten Zugabe des weiteren Mediums (II) aus
   einem mit diesem mittels einer Zuführungsleitung (24)

   ./.

verbundenen Mischer (22) und einer in dieser eingesetzten Dosierpumpe (23) gebildet ist, die mittels
eines durch das zu fütternde Tier (Sensor 9) oder
den Tränkeautomat (1) beeinflußbaren Programmschaltwerkes (4) steuerbar ist.

3. Tränkeautomat nach Anspruch 2,

   d a d u r c h   g e k e n n z e i c h n e t ,

   daß der Mischer (22) mit zwei jeweils auf ein unterschiedliches Flüssigkeitsniveau (a, b) ansprechbare
   Steuerelemente (29, 3o), wie Druckschalter, Elektroden
   oder dgl., versehen ist, mittels denen über Steuerleigungen (31, 32, 33, 34) die Dosierpumpe (23) sowie
   eine dem Mischer (22) zugeordnete Dosiereinrichtung
   (41) zur Zuführung des in diesem aufzubereitenden
   Mediums (II) beeinflußbar sind.

4. Tränkeautomat nach Anspruch 3,

   d a d u r c h   g e k e n n z e i c h n e t ,

   daß eines oder beide Steuerelemente (29, 3o) des
   Mischers (22) höhenverstellbar angeordnet sind.

5. Tränkeautomat nach einem oder mehrren der
   Ansprüche 2 bis 4,

   d a d u r c h   g e k e n n z e i c h n e t ,

   daß die Dosiereinrichtung (41) aus einem oder mehreren
   nacheinander zuschaltbaren, in den Mischer (22) eingesetzten und über dessen oberem Flüssigkeitsniveau (b)

./.

angeordneten Vorratsbehältnissen (42) gebildet ist, die an die Wasserzuführungsleitung (7'') des Mischers (22) angeschlossen und zur Ausbringung des in diesen eingelagerten Mediums (II) von dem gesteuert zuführbaren Wasser durchspülbar sind.

6. Tränekautomat nach Anspruch 5,

   d a d u r c h   g e k e n n z e i c h n e t ,

   daß der dem Mischer (22) zugeordnete Vorratsbehälter aus einem winklig oder U-förmig ausgebildeten Mischrohr (42) und einem auf dieses aufgesetzten Trichter (43) oder Aufsatzbehälter besteht, in den ein an die Wasserzuführungsleitung (7'') angeschlossener Verteil- oder Sprühkopf (44) für das in den Vorratsbehälter (42, 43) einzubringende Wasser eingesetzt ist.

7. Tränkeautomat nach Anspruch 5 oder 6,

   d a d u r c h   g e k e n n z e i c h n e t ,

   daß zur Einbringung des in dem Vorratsbehälter (42, 43) gelagerten Mediums (II) in den Mischer (22) die Wasserzuführungsleitung (7'') mit einem Absperrventil (28) versehen ist, das mittels der diesem zugeordneten Steuerelemente (29, 3o) in Abhängigkeit von dem Flüssigkeitsniveau (a, b) steuerbar ist.

8. Tränkeautomat nach Anspruch 2 oder 3,

   d a d u r c h   g e k e n n z e i c h n e t ,

daß die Dosiereinrichtung (51) aus einem über dem Mischer (22) angeordneten Zellenrad (52), einem durch Schieber gesteuert absperrbarem Zuführungsschacht, einem Becherrad oder dgl. sowie einem zugeordneten Vorratsbehältnis (54) gebildet ist.

9. Tränkeautomat nach Anspruch 1,

d a d u r c h  g e k e n n z e i c h n e t ,

daß die dem Tränkeautomat (1) zugeordnete Vorrichtung (61) zur gesteuerten Zugabe des weiteren Mediums (II) aus einem Vorratsbehältnis (62) und einer dieses mit dem Tränkeautomaten (1) verbindenden Zugabeeinrichtung (63) in Form einer gesteuert einschaltbaren Förderschnecke, eines Förderbandes oder dgl., gebildet ist.

22. Juni 1981  e-1
A 2635

FIG. 1

# FIG. 2

FIG. 3

| Europäisches Patentamt | EUROPÄISCHER RECHERCHENBERICHT | Nummer der Anmeldung EP 82 10 4231.4 |
|---|---|---|

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| A | AU - A - 45 596 (P.D. WEBB) <br> * Seite 9, vorletzter Absatz bis Seite 10 * <br> --- | 1 | A 01 K 9/00 |
| A | DE - B - 1 782 149 (J. MAIER JR.) <br> * Ansprüche 1, 4 * <br> --- | 1 | |
| A | DE - A - 1 557 243 (F. WEYHAUSEN & CO.) <br> * Anspruch 1; Fig. 1 * <br> --- | 1 | |
| P,A | DE - U1 - 8 121 026 (M. FÖRSTER) <br> * Anspruch 1; Fig. 1 bis 3 * <br> ---- | 1 | |

**RECHERCHIERTE SACHGEBIETE (Int. Cl.³)**

A 01 K 5/02
A 01 K 9/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 09-07-1982 | SCHOFER |

EPA form 1503.1 06.78